# EUROPÄISCHE PATENTSCHRIFT

(11) **EP 3 303 010 B1**
(45) Veröffentlichungstag und Bekanntmachung des Hinweises auf die Patenterteilung: **10.04.2019**
(21) Anmeldenummer: 16705796.7
(22) Anmeldetag: 23.02.2016
(51) Int. Cl.: B60C 11/16

(54) **SPIKE UND FAHRZEUGLUFTREIFEN MIT SOLCHEN SPIKES**
SPIKE AND TIRE WITH SUCH SPIKES
CRAMPON ET BANDAGE DE PNEUMATIQUE COMPRENANT CEUX-CI

(30) Priorität: 05.06.2015 DE 102015210358
(43) Veröffentlichungstag der Anmeldung: 11.04.2018
(73) Patentinhaber: Continental Reifen Deutschland GmbH, 30165 Hannover (DE)
(72) Erfinder: SCHLITTENHARD, Jan, 30900 Wedemark (DE); RAUTIAINEN, Juha, 40520 Jyväskylä (FI); KUMPULAINEN, Ari, 41340 Laukaa (FI)
(74) Vertreter: Finger, Karsten
(86) Internationale Anmeldenummer: PCT/EP2016/053721
(87) Internationale Veröffentlichungsnummer: WO 2016/192863

(56) Entgegenhaltungen:
- DE-A1- 1 505 070
- Wärmebehandlung Von ET AL: "Merkblatt 236", , 31. Oktober 2013 (2013-10-31), XP055274487, Gefunden im Internet: URL:http://www.stahl-online.de/wp-content/ uploads/2013/10/MB236WaermebehandlungvonSt ahlRandschichthaerten.pdf [gefunden am 2016-05-23]

## Beschreibung

Die Erfindung betrifft einen Spike mit einem Spikekörper aus Stahl und einem in den Spikekörper eingesetzten Spikepin aus Hartmetall, wobei der Spikekörper eine gehärtete Randschicht aufweist, deren Härte mit zunehmender Randschichtdicke abnimmt. Die Erfindung betrifft ferner einen Fahrzeugluftreifen mit im Laufstreifen eingesetzten erfindungsgemäßen Spikes.

Seit einigen Jahren ist zu beobachten, dass auf winterlichen, insbesondere auf eisigen Fahrbahnen, Sand als Streugut durch Bruchsteinsplitt ersetzt wird. Bruchsteinsplitt ist ein Abfallprodukt aus dem Straßenbau und daher gegenüber Sand kostengünstiger. Darüber hinaus sind die Partikel von Bruchsteinsplitt größer als Sandpartikel, was die Feinstaubemission, die durch ein Zerreiben des Streugutes zwischen Reifen und Straße erzeugt wird, reduziert. Bei mit Spikes im Laufstreifen versehenen Reifen hat Bruchsteinsplitt einen hohen Abrieb der Spikekörper im Bereich des Oberflansches derselben zur Folge. Durch das Überrollen des Bruchsteinsplitts durch die Reifen und den Reifenschlupf wird Bruchsteinsplitt immer weiter zermahlen, sodass ein scharfkörniger Sand entsteht. Dieser kann in den Spalt zwischen den Spikekörper und den umgebenden Gummi eindringen und sich in die Gummimatrix einbetten. Die Sandkörner werden daher teilweise vom Gummi umschlossen, was insbesondere darauf zurückzuführen ist, dass der Reibungskoeffizient zwischen Gummi und Sand höher ist als jener zwischen Stahl und Sand. Beim Abrollen des Reifens finden Relativbewegungen zwischen den Spikes und der umgebenden Gummimatrix statt. Die "eingebetteten" Sandkörner schleifen nun die Spikekörper, insbesondere von der Seite her, ab. Die Spikekörper werden dünner, wodurch die Pressung der umgebenden Gummimatrix geringer wird, größere Sandpartikel können nun eindringen und den Schleifprozess weiter beschleunigen. Die damit einhergehende Reduktion der Haltkraft des Spikes in der Gummimatrix bewirkt zum Einen, dass das Risiko eines Spikeverlustes ansteigt, zum Anderen sitzt der Spike zu locker in seinem Spikeloch und kann keine seitlichen Kräfte mehr übertragen.

Ein Spike der eingangs genannten Art ist beispielsweise aus der DE 15 05 070 A1 bekannt und zeigt die Merkmale des Oberbegriffs von Anspruch 1.

Um die Außenfläche des Spikekörpers widerstandsfähiger gegenüber Reibung zu machen, wird vorgeschlagen, die Oberfläche des Spikekörpers durch Einsatzhärtung, Härtung im Nitrierverfahren oder durch Beschichtung härter zu machen.

Der Erfindung liegt daher die Aufgabe zu Grunde, die Verschleißfestigkeit und Härte der Spikekörper weiter zu verbessern, um den beschriebenen Abriebmechanismus zumindest zu verlangsamen, wenn nicht sogar zu unterbinden, und die daraus resultierenden Nachteile zu reduzieren bzw. zu eliminieren.

Gelöst wird die gestellte Aufgabe erfindungsgemäß dadurch, dass der Spikekörper aus Stahl mit einem Kohlenstoffgehalt von 0,005 % bis 0,03 % besteht, wobei die Härte in einer Randschichtdicke von 0,3 mm des Spikekörpers um mindestens 15 %, insbesondere um mindestens 20 % geringer ist, als in einer Randschichtdicke von 0,1 mm.

Erfindungsgemäße Spikes weisen jene Materialeigenschaften auf, die erforderlich sind, um eine gute Verschleißfestigkeit und optimale Härte, vor allem in der Randschicht der Spikekörper, sicherzustellen. Vor dem Härtungsprozess ist eine gute Verarbeitbarkeit des einen geringen Kohlenstoffanteil aufweisenden Stahls in der Produktion der Spikes sichergestellt, insbesondere können die Spikekörper nach wie vor durch Kaltfließpressen, Gesenkschmieden oder Drehen hergestellt werden. In diesem Stadium bleibt auch eine ausreichende Dehnbarkeit des Spikekörpermaterials erhalten, damit ein etwaigen Einreißen oder Brechen der Spikekörper beim Zusammenbau mit den Spikepins verhindert wird. Die Randschicht der Spikekörper gewährleistet eine hohe Härte und Verschleißfestigkeit gegen einen schleifenden Abrieb der Spikekörper im Reifengummi. Der Stahl mit einem Kohlenstoffgehalt von 0,005 % bis 0,03 % gestattet ein Herstellen der Spikekörper nach einem der gängigen, erprobten Verfahren.

Um die Verschleißbeständigkeit und Härte der Spikekörper zu erhöhen, könnten grundsätzlich auch höherwertige Stahllegierungen verwendet werden. Bei solchen Stahllegierungen ist jedoch erfahrungsgemäß der Effekt auf die Abriebsbeständigkeit eher gering, als negative Nebeneffekte treten erhöhte Materialkosten, erhöhter Werkzeugverschleiß und erhöhte Maschinenstillstandszeiten auf. Bei höherwertigen, härteren und damit spröderen Stählen besteht ferner die Gefahr, dass es bei gedrehten Spikekörpern bei der Verwendung von nicht runden Spikepins zu Einrissen und Brüchen im Spikekörpermaterial kommen kann, da sich die Lochgeometrie nicht optimal auf die Pingeometrie anpassen lässt. Bei fließgepressten oder gesenkgeschmiedeten Spikekörpern lässt sich eine bessere Abstimmung des Spikepinloches an den Spikepin erzielen. Wie jedoch erwähnt steigen durch die Verwendung höherwertige Stähle der Werkzeugverschleiß und der Maschinenverschleiß deutlich an. Dies erhöht die Maschinenstillstandszeiten, senkt die Produktivität und erhöht die Stückkosten.

Für eine möglichst optimale Verschleißbeständigkeit ist es vorteilhaft, wenn die Härte der Spikekörper in einer Randschichtdicke von 0,3 mm des Spikekörpers um mindestens 15 %, insbesondere um mindestens 20 % geringer ist als in einer Randschichtdicke von 0,1 mm. Bevorzugt ist ferner eine Ausführung, bei der die Härte in einer Randschichtdicke von 0,1 mm des Spikekörpers mindestens 700 HV1, in einer Randschichtdicke von 0,3 mm mindestens 500 HV1, insbesondere mindestens 550 HV1, beträgt.

Der Spikepin erfindungsgemäßer Spikes besteht vorteilhafter Weise aus einem Hartmetall, dessen Kohlenstoffgehalt 5,7 % bis 6,2 % beträgt und welches eine magnetische Sättigung von 75 % bis 95 % aufweist. Solche Spikepins sind besonders abriebbeständig ohne spröde zu sein.

Die Erfindung betrifft ferner einen Fahrzeugluftreifen mit einem Laufstreifen mit Spikelöchern, in welche erfindungsgemäß ausgeführte bzw. erfindungsgemäß hergestellte Spikes eingesetzt sind.

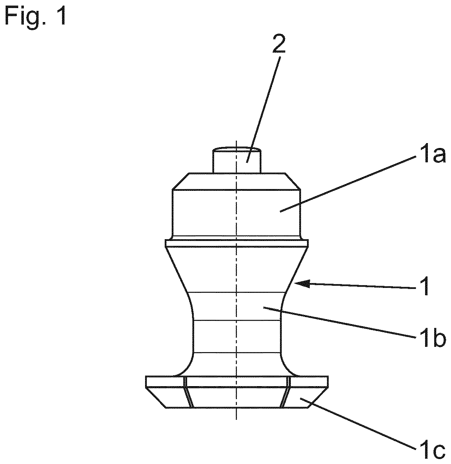

Weitere Merkmale, Vorteile und Einzelheiten der Erfindung werden nun anhand der Zeichnung näher beschrieben. Die einzige Zeichnungsfigur, Fig. 1, zeigt eine Seitenansicht eines Spikes.

Fig. 1 zeigt eine Ausführungsvariante eines üblichen Spikes mit einem Spikekörper 1 und einem Spikepin 2. Der Spikekörper 1 weist einen Oberflansch 1a, einen taillierten Mittelteil 1b und einen Fußflansch 1c auf. Der Oberflansch 1a ist in bekannter Weise mit einem Pinloch versehen ist, in welches der Spikepin 2 eingesetzt ist. Der Spikekörper 1 kann rotationssymmetrisch oder in an sich bekannter Weise länglich ausgeführt sein. Der Spikepin 2 selbst kann ebenfalls rotationssymmetrisch ausgeführt sein oder eine längliche Form aufweisen. Die Spikes werden in Spikelöcher, welche während der Vulkanisation des Reifens in einer Heizform im Laufstreifen geformt werden, im Gummimaterial eines Laufstreifens des Fahrzeugluftreifens unter Pressung eingebracht.

Der Spikekörper 1 besteht aus Stahl und wird üblicherweise durch Drehen, Kaltfließpressen oder Gesenkschmieden hergestellt. Zur Herstellung der Spikekörper 1 werden insbesondere aus Gründen der Verarbeitbarkeit bestimmte Materialeigenschaften aufweisende Stahllegierungen verwendet. Im Rahmen der Erfindung besonders geeignete Stahllegierungen weisen einen geringen Kohlenstoffgehalt in der Größenordnung von 0,005 % bis 0,03 %, vorzugsweise von 0,008 %, auf. Weitere Legierungsbestandteile sind beispielsweise Silicium in einem Anteil von etwa 0,05 %, Mangan in einem Anteil von etwa 0,25 %, Phosphor in einem Anteil von etwa 0,012 %, Schwefel in einem Anteil von etwa 0,007 %, Aluminium in einem Anteil von etwa 0,035 % sowie Stickstoff in einem Anteil von etwa 0,004 %. Spikepins bestehen üblicherweise aus einem Hartmetall, insbesondere aus gesinterten Carbidhartmetallen, welche üblicherweise aus 90 % bis 94 % Wolframcarbid, ferner einem geringen Anteil an Titancarbid bzw. aus Wolframtitancarbiden bestehen und gemeinsam mit Cobalt als Matrix in einem Sinterverfahren gebunden werden. Der Kohlenstoffgehalt des Hartmetalls sollte, um eine geringe Sprödigkeit des Spikepins zu gewährleisten, zwischen 6 % und 6,2 % betragen.

Zur Erhöhung der Verschleißbeständigkeit und der Härte der Spikekörper 1 werden diese gemäß der Erfindung entweder mit bereits eingesetztem Spikepin 2 oder vor dem Einsetzen des Spikepins 2 gehärtet, sodass der Spikekörper 1 eine gehärtete Randschicht aufweist, deren Härte mit zunehmender Randschichtdicke abnimmt, wobei die Härte in einer Randschichtdicke von 0,3 mm des Spikekörpers 1 um mindestens 15 %, insbesondere um mindestens 20 % geringer ist, als in einer Randschichtdicke von 0,1 mm. Innerhalb einer Dicke der gehärteten Randschicht von 0,1 mm bis 0,3 mm sollte der Spikekörper 1 eine Vickershärte (gemäß DIN EN ISO 6507-1: 2005) von mindestens 500 HV1, insbesondere von mindestens 550 HV1, aufweisen. In einer Schichttiefe von 0,1 mm weisen gemäß der Erfindung gehärtete Spikekörper 1 bevorzugt eine Vickershärte von mindestens 700 HV1 auf.

Das bevorzugte Härtungsverfahren, in welchem die Spikekörper 1 mit bereits eingesetzten Spikepins 2 dem Härtungsprozess unterzogen werden, wird nachfolgend zusammenfassend beschrieben. Dabei werden jene nachfolgend erwähnten Verfahrensschritte, die bei der Härtung von Stählen üblich sind, nicht näher beschrieben. Werden die Spikekörper 1 mitsamt Spikepins 2 gehärtet, ist es wesentlich, dass das Hartmetall der Spikepins 2 nach der Härtung einen Kohlenstoffgehalt von 5,7 % bis 6,2 % aufweist, die magnetische Sättigung vor Anwendung der Härtung sollte zwischen 75 % und 95 % betragen. Ein geringerer Wert der magnetischen Sättigung könnte eine unerwünschte Sprödigkeit des Spikepins 2 nach dem Härtungsprozess zur Folge haben.

Im ersten Verfahrensschritt werden die Spikes durch Carbonitrieren gehärtet. Dabei wird neben Kohlenstoff gleichzeitig in geringen Mengen Ammoniak in die Randschicht eindiffundiert. Das Carbonitrieren findet bei einer Temperatur von 800° C bis 920° C, vorzugsweise bei 850° C bis 880° C, insbesondere bei einer Temperatur von 875° C, statt, die Haltezeit beträgt zwischen 30 Minuten und 150 Minuten, insbesondere bis zu 120 Minuten. Eine Temperatur im angegebenen Bereich hat sich als vorteilhaft erwiesen, um eine für die Spikekörper 1 optimale Carbonitriertiefe sicherzustellen. Anschließend werden die Spikes vorzugsweise in Öl bei einer Temperatur von 70° C bis 90° C, insbesondere etwa 80° C, alternativ in warmem Wasser gekühlt. Im Anschluss werden die Spikes gewaschen und in einem Anlassofen wärmebehandelt, insbesondere um Spannungen abzubauen. Diese Wärmebehandlung erfolgt bei einer Temperatur von 170° C bis 200° C, insbesondere von 180° C, für einen Zeitraum von 2 Stunden bis 3,5 Stunden. Im letzten Verfahrensschritt werden die Spikes galvanisch verzinkt.

Die Haltekraft der Spikepins 2 vor der Härtung beträgt in der Größenordnung von 500 N bis 1000 N. Da der Stahl der Spikekörper 1 während des Härtungsprozesses einer größeren thermischen Expansion unterliegt als das Hartmetall der Spikepins 2, schrumpft das Spikeloch im Spikekörper 1, sodass sich vorteilhafterweise die Ausziehkräfte im Wesentlichen verdoppeln.

Wie bereits erwähnt können die Spikekörper 1 auch ohne eingesetzten Spikepin 2 gehärtet werden. Die einzelnen Schritte des Härtungsverfahrens laufen dabei wie oben beschrieben ab, wobei eine etwaige Versprödung des Spikepins 2 durch die Härtung bei diesem Verfahren nicht von Belang ist.

### Bezugsziffernliste

- 1 .......................: Spikekörper
- 1a .....................: Oberflansch
- 1b .....................: Mittelteil
- 1c .....................: Fußflansch
- 2 .......................: Spikepin

## Patentansprüche

1. Spike mit einem Spikekörper (1) aus Stahl und einem in den Spikekörper (1) eingesetzten Spikepin (2) aus Hartmetall, wobei der Spikekörper eine gehärtete Randschicht aufweist, deren Härte mit zunehmender Randschichtdicke abnimmt,
**dadurch gekennzeichnet,**
**dass** der Spikekörper (1) aus Stahl mit einem Kohlenstoffgehalt von 0,005 % bis 0,03 % besteht, wobei die Härte in einer Randschichtdicke von 0,3 mm des Spikekörpers (1) um mindestens 15 %, insbesondere um mindestens 20 % geringer ist, als in einer Randschichtdicke von 0,1 mm.

2. Spike nach Anspruch 1, **dadurch gekennzeichnet, dass** die Härte in einer Randschichtdicke von 0,1 mm des Spikekörpers (1) mindestens 700 HV1 beträgt.

3. Spike nach Anspruch 1 oder 2, **dadurch gekennzeichnet, dass** die Härte in einer Randschichtdicke von 0,3 mm des Spikekörpers (1) mindestens 500 HV1, insbesondere mindestens 550 HV1, beträgt

4. Spike nach einem der Ansprüche 1 bis 3, **dadurch gekennzeichnet, dass** der Spikepin (2) aus einem Hartmetall besteht, dessen Kohlenstoffgehalt 5,7 % bis 6,2 % beträgt.

5. Spike nach einem der Ansprüche 1 bis 4, **dadurch gekennzeichnet, dass** der Spikepin (2) aus einem Hartmetall hergestellt ist, welches eine magnetische Sättigung von 75 % bis 95 % aufweist.

6. Fahrzeugluftreifen mit einem Laufstreifen mit Spikelöchern, in welche Spikes gemäß einem oder mehreren der Ansprüche 1 bis 5 eingesetzt sind.

## Claims

1. Spike comprising a spike body (1) made of steel and a spike pin (2) made of hard metal inserted into the spike body (1), the spike body having a hardened outer layer, the hardness of which decreases with increasing thickness of the outer layer,
**characterized in that** the spike body (1) consists of steel with a carbon content of 0.005% to 0.03%, the hardness at an outer layer thickness of 0.3 mm of the spike body (1) being less by at least 15%, in particular by at least 20%, than at an outer layer thickness of 0.1 mm.

2. Spike according to Claim 1, **characterized in that** the hardness at an outer layer thickness of 0.1 mm of the spike body (1) is at least 700 HV1.

3. Spike according to Claim 1 or 2, **characterized in that** the hardness at an outer layer thickness of 0.3 mm of the spike body (1) is at least 500 HV1, in particular at least 550 HV1.

4. Spike according to one of Claims 1 to 3, **characterized in that** the spike pin (2) consists of a hard metal, the carbon content of which is 5.7% to 6.2%.

5. Spike according to one of Claims 1 to 4, **characterized in that** the spike pin (2) is produced from a hard metal that has a magnetic saturation of 75% to 95%.

6. Pneumatic vehicle tyre comprising a tread with spike holes in which spikes according to one or more of Claims 1 to 5 are inserted.

## Revendications

1. Crampon comportant un corps de crampon (1) en acier et un picot de crampon (2) en métal dur, inséré dans le corps de crampon (1), le corps de crampon comportant une couche de bord durcie dont la dureté diminue à mesure que l'épaisseur de la couche de bord augmente,
**caractérisé en ce que**
le corps de crampon (1) est en un acier ayant une teneur en carbone de 0,005 % à 0,03 %, la dureté pour une épaisseur de couche de bord de 0,3 mm du corps de crampon (1) étant inférieure d'au moins 15 %, en particulier d'au moins 20 %, à celle pour une épaisseur de couche de bord de 0,1 mm.

2. Crampon selon la revendication 1, **caractérisé en ce que** la dureté pour une épaisseur de couche de bord de 0,1 mm du corps de crampon (1) est d'au moins 700 HV1.

3. Crampon selon la revendication 1 ou 2, **caractérisé en ce que** la dureté pour une épaisseur de couche de bord de 0,3 mm du corps de crampon (1) est d'au moins 500 HV1, en particulier d'au moins 550 HV1.

4. Crampon selon l'une des revendications 1 à 3, **caractérisé en ce que** le picot de crampon (2) est en un métal dur dont la teneur en carbone est de 5,7 % à 6,2 %.

5. Crampon selon l'une des revendications 1 à 4, **caractérisé en ce que** le picot de crampon (2) est en un métal dur ayant une saturation magnétique de 75 % à 95 %.

6. Pneumatique pour véhicule comportant une bande de roulement pourvue de trous de crampon dans lesquels sont insérés des crampons selon l'une ou plusieurs des revendications 1 à 5.
